# FASCICULE DE BREVET EUROPEEN

(11) **EP 4 158 171 B1**
(45) Date de publication et mention de la délivrance du brevet: **01.05.2024**
(21) Numéro de dépôt: 21734195.7
(22) Date de dépôt: 25.05.2021
(51) Int. Cl.: F02C 3/22

(54) **INSTALLATION D'ALIMENTATION EN CARBURANT CRYOGÉNIQUE DE LA CHAMBRE DE COMBUSTION D'UNE TURBOMACHINE**
KRYOGENES BRENNSTOFFZUFUHRSYSTEM FÜR EINE TURBINENMOTORBRENNKAMMER
CRYOGENIC FUEL SUPPLY SYSTEM FOR A TURBINE ENGINE COMBUSTION CHAMBER

(30) Priorité: 28.05.2020 FR 2005644
(43) Date de publication de la demande: 05.04.2023
(73) Titulaire: SAFRAN, 75015 Paris (FR)
(72) Inventeur: JOUAN, Hugo Pierre Mohamed, 77550 MOISSY-CRAMAYEL (FR)
(74) Mandataire: Regimbeau
(86) Numéro de dépôt international: PCT/FR2021/050944
(87) Numéro de publication internationale: WO 2021/240107

(56) Documents cités:
- GB-A- 1 392 783
- US-A- 5 272 870
- US-A1- 2015 000 298
- US-A1- 2015 337 730

## Description

### DOMAINE DE L'INVENTION

L'invention se situe dans le domaine des turbomachines pour aéronefs.

La présente invention concerne plus précisément une installation d'alimentation en carburant cryogénique de la chambre de combustion d'une turbomachine d'un aéronef et une turbomachine d'un aéronef comprenant successivement au moins un compresseur d'air, une chambre de combustion alimentée en carburant cryogénique et au moins une turbine, cette turbomachine étant équipée de ladite installation d'alimentation en carburant cryogénique.

### ETAT DE LA TECHNIQUE

Les carburants cryogéniques sont habituellement mis en oeuvre pour la propulsion spatiale car ils permettent des rendements thermodynamiques meilleurs. Leur transposition au domaine de l'aéronautique et l'industrialisation de leur emploi à grand échelle conduit toutefois à devoir résoudre un certain nombre de problèmes techniques.

Ainsi, l'emploi de l'hydrogène liquide a été envisagé car il permettrait de réduire à néant les émissions de CO₂.

Un autre carburant cryogénique utilisable est le gaz naturel « liquéfié » (connu sous l'acronyme GNL), qui, par rapport à l'hydrogène liquide, présente l'avantage supplémentaire de pouvoir être mis en oeuvre à bien plus haute température, puisque sa température de liquéfaction à 1 Bar (10⁵Pa) est de moins 161°C (112 K) contre moins 252°C (21 K) pour l'hydrogène liquide, ce qui simplifie son emploi.

Dans les deux cas précités, il reste nécessaire de transporter ces carburants cryogéniques sous forme liquide, pour que leur volume à transporter dans l'aéronef soit acceptable, puis de les vaporiser et donc de les réchauffer pour pouvoir les utiliser dans une chambre de combustion

Il pourrait également être souhaitable d'utiliser le carburant cryogénique dans la chambre de combustion non plus à l'état gazeux mais à l'état de fluide supercritique, ce qui n'est pas prévu dans l'état de la technique précité. Pour mémoire, on rappellera que le carburant atteint l'état de fluide supercritique lorsqu'il se trouve à une température supérieure à sa température critique et à une pression supérieure à sa pression critique.

On connaît également d'après le document US 2015/000298 une installation d'alimentation en carburant cryogénique de la chambre de combustion d'une turbomachine, cette dernière comprenant également un compresseur et une turbine. Le carburant cryogénique, du type LNG, est stocké dans un réservoir.

Cette installation comporte également un ensemble d'échangeurs de chaleur qui comprend un échangeur carburant cryogénique/gaz d'échappement et un échangeur carburant cryogénique/air circulant dans la veine primaire.

Toutefois, ce document ne décrit pas une chambre de mélange, ni un échangeur de chaleur carburant cryogénique/huile, ni un dispositif de chauffage auxiliaire.

### EXPOSE DE L'INVENTION

Un but de l'invention est donc de proposer une installation d'alimentation en carburant cryogénique de la chambre de combustion d'une turbomachine d'un aéronef, qui permette de vaporiser le carburant cryogénique liquide ou de l'amener dans un état de fluide supercritique, d'une manière écologiquement et énergétiquement intéressante.

A cet effet, l'invention concerne une installation d'alimentation en carburant cryogénique de la chambre de combustion d'une turbomachine d'un aéronef, cette turbomachine comprenant successivement au moins un compresseur d'air, ladite chambre de combustion et au moins une turbine, cette installation d'alimentation comprenant :
- un réservoir de stockage de ce carburant cryogénique à l'état liquide,
- une chambre de mélange recevant différents flux de carburant cryogénique à l'état supercritique ou gazeux, cette chambre de mélange étant raccordée à ladite chambre de combustion pour alimenter celle-ci en carburant cryogénique à l'état supercritique ou gazeux.

Conformément à l'invention, cette installation d'alimentation comprend :
- un dispositif de chauffage auxiliaire monté sur une canalisation qui raccorde ledit réservoir à la chambre de mélange, ce dispositif de chauffage auxiliaire permettant de réchauffer le carburant cryogénique,
- un ensemble d'échangeurs de chaleur, raccordé audit réservoir de carburant cryogénique et à ladite chambre de mélange, et monté en parallèle dudit dispositif de chauffage auxiliaire, cet ensemble d'échangeurs de chaleur comprenant un échangeur de chaleur carburant cryogénique/huile et un échangeur de chaleur carburant cryogénique/air circulant dans la veine primaire de la turbomachine,
- un dispositif de répartition de flux disposé en amont du dispositif de chauffage auxiliaire, au moins un dispositif de répartition de flux disposé en amont de l'ensemble d'échangeurs de chaleur, l'ouverture et la fermeture de ces différents dispositifs de répartition de flux étant pilotées par une unité centrale de commande.

Grâce à ces caractéristiques de l'invention, et notamment à la présence du dispositif de chauffage auxiliaire, il est possible d'avoir un échangeur de chaleur carburant cryogénique/huile et un échangeur carburant cryogénique/air circulant dans la veine primaire de la turbomachine, de plus petites dimensions, qui sont donc moins lourds et qui génèrent moins de pertes de charge et moins de diminution de la poussée de l'aéronef. Ainsi, l'installation d'alimentation conforme à l'invention est plus écologique et plus efficace énergétiquement.

Selon d'autres caractéristiques avantageuses et non limitatives de l'invention, prises seules ou en combinaison :
- l'installation comprend une pompe, disposée à la sortie du réservoir de carburant cryogénique liquide et en amont dudit dispositif de chauffage auxiliaire et dudit ensemble d'échangeurs de chaleur, et en ce que cette pompe permet d'amener le carburant cryogénique issu du réservoir de stockage, à une pression supérieure à la pression critique de ce carburant cryogénique ;
- le dispositif de chauffage auxiliaire, l'échangeur de chaleur carburant cryogénique/huile et l'échangeur de chaleur carburant cryogénique/air circulant dans la veine primaire de la turbomachine sont des échangeurs de type supercritique permettant d'amener le carburant cryogénique à une température supérieure à sa température critique ;
- l'installation comprend une pompe, disposée à la sortie du réservoir de carburant cryogénique liquide et en amont du dispositif de chauffage auxiliaire et de l'ensemble d'échangeur de chaleur, cette pompe permettant de mettre sous pression le carburant cryogénique, sortant du réservoir, afin qu'il soit totalement liquide ;
- le dispositif de chauffage auxiliaire, l'échangeur de chaleur carburant cryogénique/huile et l'échangeur de chaleur carburant cryogénique/air circulant dans la veine primaire de la turbomachine sont des échangeurs de type diphasique permettant de réchauffer le carburant cryogénique à l'état liquide pour l'amener à l'état gazeux ;
- ladite turbomachine est une turbomachine à double corps comprenant successivement un compresseur d'air basse pression, un compresseur d'air haute pression, ladite chambre de combustion, une turbine haute pression et une turbine basse pression et ledit échangeur de chaleur carburant cryogénique/air circulant dans la veine primaire de la turbomachine est un échangeur de refroidissement inter-compresseurs disposé entre le compresseur d'air basse pression et le compresseur d'air haute pression et réalisant l'échange thermique avec de l'air prélevé dans la veine primaire, en aval dudit compresseur d'air basse pression de la turbomachine ;
- ledit échangeur de chaleur carburant cryogénique/air circulant dans la veine primaire de la turbomachine est un récupérateur de chaleur réalisant l'échange thermique avec de l'air prélevé dans la veine primaire, en aval de la turbine de la turbomachine ;
- le dispositif de chauffage auxiliaire est un dispositif électrique ou thermique.

Selon une première variante de réalisation, ledit échangeur de refroidissement inter-compresseurs est monté en série avec l'échangeur de chaleur carburant cryogénique/huile, de préférence en amont de celui-ci.

Selon une seconde variante de réalisation, ledit échangeur de refroidissement inter-compresseurs est monté en parallèle avec l'échangeur de chaleur carburant cryogénique/huile.

De préférence, le récupérateur de chaleur et l'échangeur de chaleur carburant cryogénique/huile sont montés en série, le récupérateur de chaleur étant monté en amont ou en aval de l'échangeur de chaleur carburant cryogénique/huile.

De façon avantageuse, l'installation comprend un compresseur de carburant, disposé entre la chambre de mélange et la chambre de combustion.

De préférence, le carburant cryogénique est du gaz naturel liquéfié ou de l'hydrogène liquide.

De préférence, le dispositif de répartition de flux est une vanne.

L'invention concerne également une turbomachine d'un aéronef comprenant successivement au moins un compresseur d'air, une chambre de combustion alimentée en carburant cryogénique et au moins une turbine. Conformément à l'invention, ladite turbomachine comprend une installation d'alimentation en carburant cryogénique de ladite chambre de combustion, telle que précitée.

L'invention concerne enfin un procédé de pilotage de l'installation d'alimentation en carburant cryogénique de ladite chambre de combustion telle que précitée, qui comprend les étapes qui consistent :
- pendant la phase de décollage de l'aéronef, à ouvrir ledit dispositif de répartition de flux disposé en amont du dispositif de chauffage auxiliaire et ledit au moins un dispositif de répartition de flux disposé en amont de l'ensemble d'échangeurs de chaleur, de façon à faire circuler le carburant cryogénique à réchauffer dans ledit dispositif de chauffage auxiliaire et dans ledit ensemble d'échangeurs de chaleur,
- et pendant les autres phases de vol de l'aéronef, à fermer ledit dispositif de répartition de flux disposé en amont du dispositif de chauffage auxiliaire et à ouvrir ledit au moins un dispositif de répartition de flux disposé en amont de l'ensemble d'échangeurs de chaleur, de façon à faire circuler le carburant cryogénique à réchauffer uniquement dans ledit ensemble d'échangeurs de chaleur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] représente une vue d'ensemble d'une turbomachine, équipée de l'installation d'alimentation en carburant cryogénique de sa chambre de combustion, dont seule une partie est visible sur cette figure.
[Fig. 2] est une vue schématique de l'installation d'alimentation en carburant cryogénique de la chambre de combustion de la turbomachine d'un aéronef, conforme à l'invention.

Sur l'ensemble des figures, les éléments identiques portent des références identiques.

### DESCRIPTION DETAILLEE DE L'INVENTION

L'invention concerne une installation d'alimentation en carburant cryogénique de la chambre de combustion d'une turbomachine d'un aéronef, tel qu'un avion.

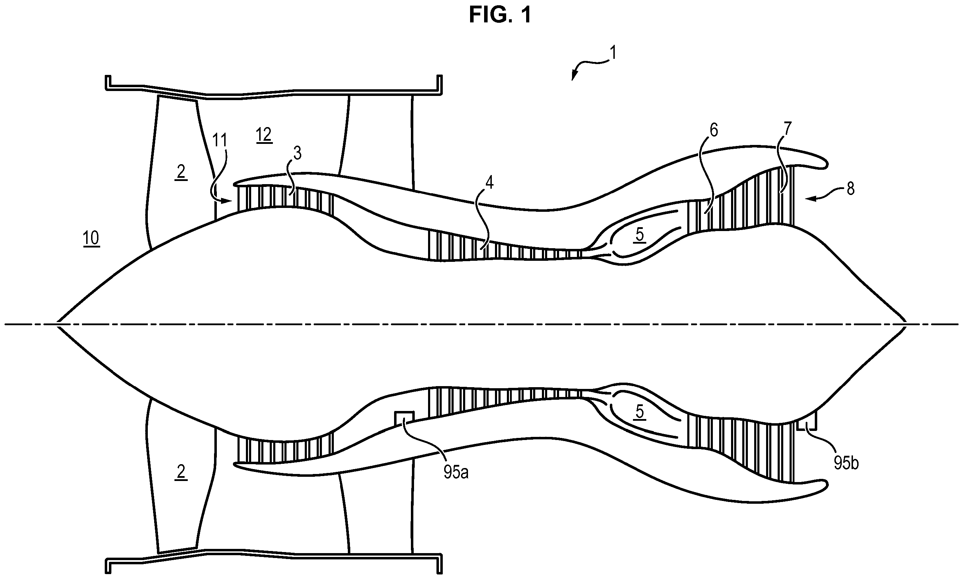

La figure 1 illustre un exemple d'une telle turbomachine. Il s'agit ici d'une turbomachine à double flux et à double corps.

Cette turbomachine 1 comprend successivement, dans le sens de la circulation de l'air, c'est-à-dire de l'amont (à gauche sur la figure 1) vers l'aval (à droite sur la figure 1), une entrée d'air 10 dans laquelle se trouve une soufflante 2, qui débite l'air d'une part dans une veine primaire 11 et d'autre part dans une veine secondaire 12. Par « veine », on entend le volume (ici en forme de canal annulaire) au travers duquel circule un flux d'air.

Le flux d'air circulant dans la veine primaire 11 traverse successivement un compresseur d'air basse pression 3, un compresseur d'air haute pression 4, une chambre de combustion 5, une turbine haute pression 6 et une turbine basse pression 7, avant d'être éjecté à travers une tuyère de flux primaire 8.

D'autres types de turbomachine pourraient être équipés de l'installation d'alimentation en carburant cryogénique conforme à l'invention, sans pour autant sortir du cadre de l'invention, par exemple une turbomachine à simple corps, qui ne comprend alors qu'un compresseur d'air et qu'une turbine, reliés entre eux par un arbre, la chambre de combustion étant interposée entre ce compresseur d'air et cette turbine.

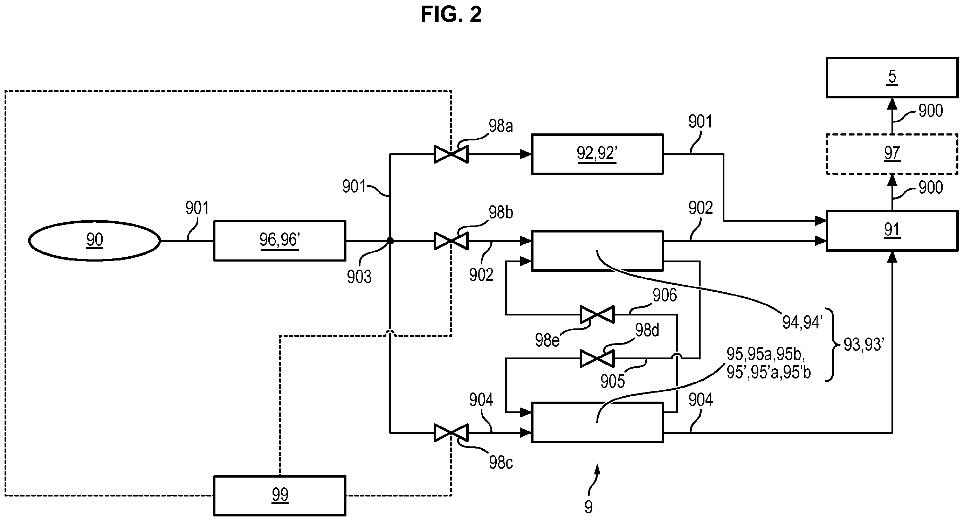

L'installation 9 d'alimentation en carburant cryogénique, conforme à l'invention, va maintenant être décrite en liaison avec la figure 2.

Cette installation 9 comprend un réservoir 90 de stockage de carburant cryogénique, à l'état liquide. Ce carburant cryogénique est destiné à alimenter la chambre de combustion 5, via diverses canalisations qui vont être décrites ultérieurement.

Ce carburant cryogénique est par exemple du gaz naturel liquéfié ou de l'hydrogène liquide.

L'installation 9 comprend également une chambre de mélange 91, qui reçoit différents flux de carburant cryogénique, à l'état gazeux ou supercritique comme cela sera décrit ultérieurement. Cette chambre de mélange 91 est raccordée à la chambre de combustion 5 par au moins une canalisation 900. En outre, le carburant est préférentiellement injecté dans la chambre de combustion 5 par au moins un injecteur non représenté sur les figures.

De façon facultative, un compresseur de carburant 97 peut être disposé sur la ou les canalisation(s) 900, entre la chambre de mélange 91 et la chambre de combustion 5. Ce compresseur 97 permet d'augmenter la pression à laquelle le carburant cryogénique est injecté dans la chambre de combustion 5.

L'installation 9 comprend également un dispositif de chauffage auxiliaire, monté sur une canalisation 901, qui raccorde le réservoir 90 à la chambre de mélange 91.

Selon un premier mode de réalisation de l'invention, ce dispositif de chauffage auxiliaire, référencé 92, permet de réchauffer le carburant cryogénique et de le faire changer de phase pour l'amener de l'état liquide à l'état gazeux. Selon un deuxième mode de réalisation de l'invention, ce dispositif de chauffage auxiliaire, dit de type « supercritique » et référencé 92', permet de réchauffer le carburant cryogénique et de l'amener à une température supérieure à sa température critique.

Ce dispositif de chauffage auxiliaire 92, 92' est de préférence électrique ou thermique. Il s'agit par exemple de serpentins, à l'intérieur desquels circule ledit carburant cryogénique, ces serpentins étant placés dans un liquide (eau glycolée par exemple) chauffé par la combustion d'un faible débit de carburant. Il peut également s'agir d'une résistance électrique placée dans le flux de carburant cryogénique.

De préférence, une pompe est disposée sur la canalisation 901, à la sortie du réservoir 90 et en amont du dispositif de chauffage auxiliaire 92.

Selon un premier mode de réalisation de l'invention, cette pompe, référence 96, permet de mettre sous pression le carburant cryogénique sortant du réservoir 90 et de garantir ainsi que celui-ci est bien liquide et ne contient pas de gaz, avant d'être introduit dans les différents échangeurs décrits ci-après.

Selon un deuxième mode de réalisation de l'invention, cette pompe, dite de type « supercritique » et référencée 96', permet d'amener le carburant cryogénique, issu du réservoir 90 à une pression supérieure à sa pression critique.

De préférence également, un dispositif de répartition de flux 98a est disposé sur la canalisation 901, en amont du dispositif de chauffage auxiliaire 92, 92' et en aval de la pompe 96, 96'. De préférence, ce dispositif de répartition de flux 98a est une vanne et sera dénommé comme tel dans la suite de la description.

Selon un premier mode de réalisation de l'invention, un ensemble d'échangeurs de chaleur, référencé de manière générale 93, est raccordé au réservoir de stockage 90 et à la chambre de mélange 91. Il est monté en parallèle du dispositif de chauffage auxiliaire 92. Cet ensemble d'échangeurs de chaleur 93 comprend un échangeur de chaleur 94 carburant cryogénique/huile et un échangeur de chaleur 95 carburant cryogénique/air circulant dans la veine primaire 11 de la turbomachine 1.

L'échangeur de chaleur 94 carburant cryogénique/huile est par exemple un échangeur à plaques, afin d'avoir un transfert thermique optimal entre les deux flux. L'huile, qui sert à la lubrification et au refroidissement de différents organes mécaniques de l'aéronef, tels des rotors, des arbres, des roulements ou des réducteurs par exemple, sort chaude de ses différents organes et pénètre dans l'échangeur 94 où elle fournit de la chaleur au carburant cryogénique qui y circule. Ce carburant cryogénique se réchauffe et change de phase pour passer de l'état liquide à l'état gazeux. Inversement, le carburant cryogénique fournit du froid à l'huile, qui, une fois refroidie, peut alors être retournée vers les différents organes mécaniques précités, afin de refroidir ces derniers et de contribuer ainsi à l'amélioration de leurs rendements thermodynamiques.

L'échangeur de chaleur 95 carburant cryogénique/air circulant dans la veine primaire 11 de la turbomachine peut être un échangeur de refroidissement inter-compresseurs, qui est alors référencé 95a. Cet échangeur de refroidissement inters-compresseurs est disposé dans la veine primaire 11, entre le compresseur d'air basse pression 3 et le compresseur d'air haute pression 4, (voir figure 1). L'air circulant dans la veine primaire 11, est réchauffé après son passage au travers du compresseur d'air basse pression 3 et peut fournir de la chaleur au carburant cryogénique, en vue de l'amener en phase vapeur.

Cet échangeur 95a est par exemple un échangeur à plaques et/ou à ailettes.

Dans le cas d'un échangeur à ailettes, ces dernières se trouvent dans la veine primaire 11 et sont réchauffées par l'air qui y circule. Toutefois, ces ailettes constituent une surface de contact qui génère des pertes de charge dans la veine primaire 11.

Dans le cas d'un échangeur à plaques, celui-ci est disposé sur une paroi de la veine primaire 11, de préférence l'une des parois annulaires interne de cette veine, afin de limiter la longueur des canalisations le raccordant à la chambre de mélange 91.

Quel que soit le type d'échangeur 95a, il constitue un obstacle qui gêne la circulation du flux d'air dans la veine primaire 11.

Grâce à la présence du dispositif de chauffage auxiliaire 92, il est ainsi possible d'utiliser un échangeur de refroidissement inters-compresseurs 95a de plus petites dimensions, moins lourd et moins encombrant, que si ce dispositif 92 n'était pas présent.

L'échangeur de refroidissement inter-compresseurs 95a peut ainsi être dimensionné pour assurer uniquement le réchauffement du débit de carburant cryogénique nécessaire pendant la phase de vol en croisière de l'aéronef.

Lorsqu'il est nécessaire de réchauffer un débit de carburant cryogénique plus important, par exemple pendant une phase de décollage de l'aéronef durant laquelle le moteur doit fournir plus de puissance et consomme plus de carburant, il est alors possible d'utiliser également le dispositif de chauffage auxiliaire 92 pour réchauffer un débit de carburant cryogénique additionnel. Lorsque l'aéronef repasse en mode croisière, on cesse d'utiliser le dispositif de chauffage auxiliaire 92 et on utilise uniquement l'échangeur de refroidissement inter-compresseurs 95a de plus petites dimensions et générant donc moins de pertes de charge dans la veine 11.

L'échangeur de chaleur 95 carburant cryogénique/air circulant dans la veine primaire 11 de la turbomachine peut également être un récupérateur de chaleur, qui porte alors la référence 95b. Ce récupérateur de chaleur 95b est disposé dans la veine primaire 11, en aval de la turbine basse pression 7, (voir figure 1), de préférence au niveau de la tuyère de sortie 8. L'air circulant dans la veine primaire 11, en aval de la turbine basse pression 7 et notamment au niveau de la tuyère de sortie 8, est chaud et peut fournir de la chaleur au carburant cryogénique, en vue de l'amener en phase vapeur. Ce récupérateur de chaleur 95b est par exemple un échangeur à plaques ou à ailettes.

Ce récupérateur de chaleur 95b présente l'avantage d'utiliser de la chaleur qui serait autrement perdue puisque l'air chaud sortant de la tuyère 8 s'échappe hors de l'aéronef. Il présente également moins de contraintes d'installation dans la turbomachine que l'échangeur 95a.

On notera que lorsque la turbomachine 1 est à simple corps, l'échangeur de chaleur 95 est alors préférentiellement un récupérateur de chaleur 95b récupérant la chaleur de l'air sortant de la turbine. Il serait envisageable d'avoir un échangeur de chaleur similaire à l'échangeur 95a précité mais disposé avant l'unique compresseur d'air, car le carburant cryogénique possède une température plus basse que l'air entrant dans la veine 11 et qu'un échange thermique est donc possible. Toutefois, un tel échangeur de chaleur serait sans doute moins efficace.

Selon une première variante de réalisation de l'invention, l'échangeur de chaleur 95 et l'échangeur de chaleur 94 sont montés en parallèle entre eux. Ils sont alors également montés en parallèle avec le dispositif de chauffage auxiliaire 92.

Dans ce cas, l'échangeur de chaleur 94 carburant cryogénique/huile est monté sur une canalisation 902, qui raccorde le réservoir 90 (ou la pompe 96 lorsque celle-ci est présente), à la chambre de mélange 91. Comme représenté sur la figure 2, il est également possible de raccorder la canalisation 902 à un point de piquage 903 situé sur la canalisation 901, en aval de la pompe 96 et en amont de la vanne 98a. De préférence, un dispositif de répartition de flux 98b est disposé sur la canalisation 902, en amont de l'échangeur de chaleur 94 carburant cryogénique/huile et en aval de la pompe 96.

Par ailleurs, l'échangeur de chaleur 95, 95a, 95b est monté sur une canalisation 904, qui raccorde le réservoir 90, (ou la pompe 96 lorsque celle-ci est présente), à la chambre de mélange 91. Comme représenté sur la figure 2, il est également possible de raccorder la canalisation 904 au point de piquage 903. De préférence, un dispositif de répartition de flux 98c est disposé sur la canalisation 904, en amont de l'échangeur de chaleur 95 et en aval de la pompe 96.

Selon une deuxième variante de réalisation de l'invention, l'échangeur de chaleur 95 et l'échangeur de chaleur 94 sont montés en série. L'échangeur de chaleur 95, 95a, 95b peut ainsi être en amont ou en aval de l'échangeur de chaleur 94.

Pour ce faire, selon un premier mode de réalisation, représenté sur la figure 2, une canalisation de contournement 905, munie d'un dispositif de répartition de flux 98d, raccorde la sortie de l'échangeur de chaleur 94 à l'entrée de l'échangeur de chaleur 95, 95a, 95b et une canalisation de contournement 906, munie d'un dispositif de répartition de flux 98e, raccorde la sortie de l'échangeur de chaleur 95, 95a, 95b à l'entrée de l'échangeur de chaleur 94.

De préférence, ces dispositifs de répartition de flux 98b, 98c, 98d et 98e sont des vannes et seront dénommés comme tel dans la suite de la description.

L'ouverture et la fermeture des différentes vannes 98a, 98b, 98c, 98d et 98e sont pilotées par une unité centrale de commande 99. Cette unité centrale peut-être un calculateur, tel qu'un ordinateur ou un automate programmable.

Ce calculateur comprend une mémoire dans laquelle est stocké un programme (programme d'ordinateur), qui comporte des instructions de code permettant la mise en oeuvre d'un procédé de pilotage de ladite installation d'alimentation 9 et notamment de l'ouverture et de la fermeture des différentes vannes 98a à 98e.

Grâce à ce montage, il est possible en ouvrant les vannes 98b et 98c et en fermant les vannes 98d et 98e, d'avoir un montage en parallèle des échangeurs 94 et 95. En ouvrant les vanne 98b et 98d et en fermant les vannes 98c et 98e, il est possible d'avoir un montage en série des échangeurs 94 et 95, l'échangeur 94 étant en amont de l'échangeur 95, par rapport au sens de circulation du carburant cryogénique dans ces échangeurs. Inversement, en ouvrant les vannes 98c est 98e et en fermant les vannes 98b et 98d, il est possible d'avoir un montage en série des échangeurs 94 et 95, mais l'échangeur 95 étant cette fois en amont rapport à l'échangeur 94.

Bien que cela ne soit pas représenté sur les figures, il est également possible, selon un second mode de réalisation, d'avoir une seule canalisation raccordant la pompe 96 à la chambre de mélange 91 et sur laquelle les échangeurs 94 et 95 sont montés en série, selon un ordre prédéterminé, et sans les canalisations de contournement 905 et 906.

Quelle que soit la solution choisie, lorsque les échangeurs 94 et 95 sont en série, la canalisation sur laquelle ils sont montés est en parallèle de la canalisation 901. Ainsi, à tout moment, il est possible de réchauffer une partie du carburant cryogénique en utilisant le dispositif de chauffage auxiliaire 92, si jamais le débit de carburant cryogénique réchauffé dans l'ensemble d'échangeurs de chaleur 93 est insuffisant.

Un autre mode de réalisation est également envisageable. Il diffère du précédent, en ce que l'ensemble d'échangeurs de chaleur 93 précité est remplacé par un ensemble d'échangeurs de chaleur 93' qui comprend un échangeur de chaleur 94' carburant cryogénique/huile, dit « supercritique » et un échangeur de chaleur 95' carburant cryogénique/air circulant dans la veine primaire 11 de la turbomachine 1, dit « supercritique », qu'il soit de type échangeur de refroidissement inters-compresseurs 95'a ou de type récupérateur de chaleur 95'b.

L'échangeur de chaleur 94' et l'échangeur de chaleur 95', 95'a, 95'b sont dits « supercritiques » car ils permettent d'amener le carburant cryogénique à une température supérieure à sa température critique.

Pour mémoire, on rappelle que le point critique de l'hydrogène est de 32K (moins 241,15°C) pour sa température critique et de 12, 8 bars (12,8.10⁵ Pa) pour sa pression critique et que le point critique du gaz naturel est de 190 K (moins 83,15°C) pour sa température critique et de 46,8 bars (46,8.10⁵ Pa) pour sa pression critique.

De préférence, lorsque l'on utilise les échangeurs supercritiques 94', 95', 95'a et 95'b et le dispositif de chauffage auxiliaire supercritique 92' précités, on utilisera en amont la pompe supercritique 96'.

Le carburant cryogénique est ainsi amené à la chambre de mélange 91 puis à la chambre de combustion (5) à l'état de fluide supercritique.

Le reste de l'installation, les montages en parallèle ou en série et les vannes restent identiques à ce qui a été décrit précédemment.

Le procédé de pilotage de l'installation 9 va maintenant être décrit.

L'unité centrale de commande 99 reçoit des informations concernant le régime de vol (décollage, montée, croisière, etc.) et le débit de carburant cryogénique supercritique ou gazeux à fournir à la chambre de combustion 5.

Les besoins de chauffage du carburant cryogénique sont proportionnels au débit du carburant supercritique ou gazeux à fournir à la chambre de combustion 5. Or, ce débit est beaucoup plus grand au décollage que dans les autres phases du vol.

L'unité centrale 99 pilote l'ouverture et la fermeture des vannes 98b, 98c, 98d et 98e de sorte que pendant les phases de montée ou de vol en croisière, le carburant cryogénique soit réchauffé et amené en phase supercritique ou gazeuse par son passage au travers de l'ensemble d'échangeurs de chaleur 93' ou 93, la vanne 98a étant fermée.

Par ailleurs, pendant la phase de décollage ou en cas de besoin d'un débit de carburant cryogénique supplémentaire, la vanne 98a est également ouverte, de sorte qu'un volume additionnel de carburant cryogénique peut être chauffé et vaporisé ou amené à l'état supercritique dans le dispositif de chauffage auxiliaire 92, respectivement 92'. Ce carburant vaporisé ou supercritique est ensuite mélangé dans la chambre 91, avec les autres flux de carburant gazeux ou supercritiques provenant des échangeurs 94 et 95, respectivement 94' et 95'.

Par ailleurs, à l'intérieur de l'ensemble 93, 93', le carburant cryogénique liquide est dirigé principalement vers l'échangeur carburant cryogénique/huile 94, 94' pour assurer le refroidissement de l'huile. Toutefois, l'huile ne doit pas descendre en dessous d'une certaine température pour conserver sa faible viscosité. A cet effet, des capteurs de température permettent de connaître les besoins en refroidissement de l'huile et d'envoyer le débit de carburant cryogénique correspondant à ce besoin. Le reste du débit de carburant passe dans l'échangeur 95, 95'.

## Revendications

1. Installation (9) d'alimentation en carburant cryogénique de la chambre de combustion (5) d'une turbomachine (1) d'un aéronef, cette turbomachine (1) comprenant successivement au moins un compresseur d'air (3, 4), ladite chambre de combustion (5) et au moins une turbine (6, 7), cette installation comprenant :
- un réservoir de stockage de ce carburant cryogénique à l'état liquide (90),
- une chambre de mélange (91) recevant différents flux de carburant cryogénique à l'état supercritique ou gazeux, cette chambre de mélange étant raccordée à ladite chambre de combustion (5) pour alimenter celle-ci en carburant cryogénique à l'état supercritique ou gazeux,
cette installation d'alimentation (9) étant **caractérisée en ce qu'**elle comprend :
- un dispositif de chauffage auxiliaire (92,92') monté sur une canalisation qui raccorde ledit réservoir (90) à la chambre de mélange (91), ce dispositif de chauffage auxiliaire (92, 92') permettant de réchauffer le carburant cryogénique
- un ensemble d'échangeurs de chaleur (93, 93'), raccordé audit réservoir de carburant cryogénique (90) et à ladite chambre de mélange (91), et monté en parallèle dudit dispositif de chauffage auxiliaire (92, 92'), cet ensemble échangeur de chaleur (93, 93') comprenant un échangeur de chaleur carburant cryogénique/huile (94, 94') et un échangeur de chaleur carburant cryogénique/air circulant dans la veine primaire de la turbomachine (95, 95'),
- un dispositif de répartition de flux (98a), tel une vanne, disposé en amont du dispositif de chauffage auxiliaire (92, 92'),
au moins un dispositif de répartition de flux (98b, 98c, 98d, 98e), tel une vanne, disposé en amont de l'ensemble d'échangeurs de chaleur (93, 93'),
l'ouverture et la fermeture de ces différents dispositifs de répartition de flux (98a, 98b, 98c, 98d) étant pilotées par une unité centrale de commande (99).

2. Installation selon la revendication 1, **caractérisée en ce qu'**elle comprend une pompe (96'), disposée à la sortie du réservoir de carburant cryogénique liquide (90) et en amont dudit dispositif de chauffage auxiliaire (92) et dudit ensemble d'échangeurs de chaleur (93), et **en ce que** cette pompe (96') permet d'amener le carburant cryogénique issu du réservoir de stockage (90), à une pression supérieure à la pression critique de ce carburant cryogénique.

3. Installation selon la revendication 2, **caractérisée en ce que** le dispositif de chauffage auxiliaire (92'), l'échangeur de chaleur carburant cryogénique/huile (94') et l'échangeur de chaleur carburant cryogénique/air circulant dans la veine primaire de la turbomachine (95') sont des échangeurs de type supercritique permettant d'amener le carburant cryogénique à une température supérieure à sa température critique.

4. Installation selon la revendication 1, **caractérisée en ce qu'**elle comprend une pompe (96), disposée à la sortie du réservoir de carburant cryogénique liquide (90) et en amont du dispositif de chauffage auxiliaire (92) et de l'ensemble d'échangeur de chaleur (93), cette pompe (96) permettant de mettre sous pression le carburant cryogénique, sortant du réservoir (90), afin qu'il soit totalement liquide.

5. Installation selon la revendication 1 ou 4, **caractérisée en ce que** le dispositif de chauffage auxiliaire (92), l'échangeur de chaleur carburant cryogénique/huile (94) et l'échangeur de chaleur carburant cryogénique/air circulant dans la veine primaire de la turbomachine (95) sont des échangeurs de type diphasique permettant de réchauffer le carburant cryogénique à l'état liquide pour l'amener à l'état gazeux.

6. Installation selon l'une quelconque des revendications précédentes, **caractérisée en ce que** ladite turbomachine (1) est une turbomachine à double corps comprenant successivement un compresseur d'air basse pression (3), un compresseur d'air haute pression (4), ladite chambre de combustion (5), une turbine haute pression (6) et une turbine basse pression (7) et **en ce que** ledit échangeur de chaleur carburant cryogénique/air circulant dans la veine primaire de la turbomachine est un échangeur de refroidissement inter-compresseurs (95a, 95'a) disposé entre le compresseur d'air basse pression (3) et le compresseur d'air haute pression (4) et réalisant l'échange thermique avec de l'air prélevé dans la veine primaire, en aval dudit compresseur d'air basse pression (3) de la turbomachine (1).

7. Installation selon l'une quelconque des revendications 1 à 5, **caractérisée en ce que** ledit échangeur de chaleur carburant cryogénique/air circulant dans la veine primaire de la turbomachine est un récupérateur de chaleur (95b, 95'b) réalisant l'échange thermique avec de l'air prélevé dans la veine primaire, en aval de la turbine (6,7) de la turbomachine (1).

8. Installation selon l'une des revendications précédentes, **caractérisé en ce que** le dispositif de chauffage auxiliaire (92, 92') est un dispositif électrique ou thermique.

9. Installation selon la revendication 6, **caractérisée en ce que** ledit échangeur de refroidissement inter-compresseurs (95a, 95'a) est monté en série avec l'échangeur de chaleur carburant cryogénique/huile (94, 94'), de préférence en amont de l'échangeur de chaleur carburant cryogénique/huile (94, 94').

10. Installation selon la revendication 6, **caractérisée en ce que** ledit échangeur de refroidissement inter-compresseurs (95a, 95'a) est monté en parallèle avec l'échangeur de chaleur carburant cryogénique/huile (94, 94').

11. Installation selon la revendication 7, **caractérisée en ce que** le récupérateur de chaleur (95b, 95'b) et l'échangeur de chaleur carburant cryogénique/huile (94, 94') sont montés en série.

12. Installation selon la revendication 11, **caractérisée en ce que** le récupérateur de chaleur (95b, 95'b) est monté en amont de l'échangeur de chaleur carburant cryogénique/huile (94, 94').

13. Installation selon la revendication 11, **caractérisée en ce que** le récupérateur de chaleur (95b, 95'b) est monté en aval de l'échangeur de chaleur carburant cryogénique/huile (94, 94').

14. Installation selon l'une quelconque des revendications précédentes, **caractérisée en ce qu'**elle comprend un compresseur de carburant (97), disposé entre la chambre de mélange (91) et la chambre de combustion (5).

15. Installation selon l'une des revendications précédentes, **caractérisé en ce que** le carburant cryogénique est du gaz naturel liquéfié ou de l'hydrogène liquide.

16. Turbomachine (1) d'un aéronef comprenant successivement au moins un compresseur d'air (3, 4), une chambre de combustion (5) alimentée en carburant cryogénique et au moins une turbine (6, 7), **caractérisée en ce qu'**elle comprend une installation (9) d'alimentation en carburant cryogénique de ladite chambre de combustion, conforme à l'une quelconque des revendications 1 à 15.

17. Procédé de pilotage de l'installation (9) d'alimentation en carburant cryogénique de ladite chambre de combustion conforme à l'une quelconque des revendications 1 à 15, **caractérisé en ce qu'**il comprend les étapes qui consistent :
- pendant la phase de décollage de l'aéronef, à ouvrir ledit dispositif de répartition de flux (98a) disposé en amont du dispositif de chauffage auxiliaire (92, 92') et ledit au moins un dispositif de répartition de flux (98b, 98c, 98d, 98e) disposé en amont de l'ensemble d'échangeurs de chaleur (93, 93'), de façon à faire circuler le carburant cryogénique à réchauffer dans ledit dispositif de chauffage auxiliaire (92, 92') et dans ledit ensemble d'échangeurs de chaleur (93, 93'),
- et pendant les autres phases de vol de l'aéronef, à fermer ledit dispositif de répartition de flux (98a) disposé en amont du dispositif de chauffage auxiliaire (92, 92') et à ouvrir ledit au moins un dispositif de répartition de flux (98b, 98c, 98d, 98e) disposé en amont de l'ensemble d'échangeurs de chaleur (93, 93'), de façon à faire circuler le carburant cryogénique à réchauffer uniquement dans ledit ensemble d'échangeurs de chaleur (93, 93').

## Patentansprüche

1. System (9) zur Zufuhr von kryogenem Brennstoff zur Brennkammer (5) eines Turbinenmotors (1) eines Luftfahrzeugs, wobei dieser Turbinenmotor (1) aufeinanderfolgend mindestens einen Luftverdichter (3, 4), die Brennkammer (5) und mindestens eine Turbine (6, 7) umfasst, wobei dieses System umfasst:
- einen Behälter (90) zur Lagerung dieses kryogenen Brennstoffs im flüssigen Zustand,
- eine Mischkammer (91), die verschiedene Ströme kryogenen Brennstoffs im überkritischen oder gasförmigen Zustand empfängt, wobei diese Mischkammer an die Brennkammer (5) angeschlossen ist, um kryogenen Brennstoff im überkritischen oder gasförmigen Zustand zu ihr zuzuführen,
wobei dieses Zufuhrsystem (9) **dadurch gekennzeichnet ist, dass** es umfasst:
- eine Nebenheizvorrichtung (92, 92'), die an einer Leitung montiert ist, die den Behälter (90) an die Mischkammer (91) anschließt, wobei diese Nebenheizvorrichtung (92, 92') das Erwärmen des kryogenen Brennstoffs ermöglicht;
- eine Anordnung (93, 93`) von Wärmetauschern, die an den Behälter (90) für kryogenen Brennstoff und an die Mischkammer (91) angeschlossen ist und parallel zu der Nebenheizvorrichtung (92, 92') montiert ist, wobei diese Wärmetauscheranordnung (93, 93') einen Wärmetauscher (94, 94') für kryogenen Brennstoff/Öl und einen Wärmetauscher (95, 95') für kryogenen Brennstoff/Luft, die im Primärstrahl des Turbinenmotors umläuft, umfasst,
- eine Strömungsverteilungsvorrichtung (98a), wie beispielsweise ein Ventil, das stromaufwärtig zur Nebenheizvorrichtung (92, 92') angeordnet ist,
mindestens eine Strömungsverteilungsvorrichtung (98b, 98c, 98d, 98e), wie beispielsweise ein Ventil, das stromaufwärtig zur Anordnung (93, 93`) von Wärmetauschern angeordnet ist,
wobei die Öffnung und die Schließung dieser verschiedenen Strömungsverteilungsvorrichtungen (98a, 98b, 98c, 98d) durch eine zentrale Steuereinheit (99) gelenkt werden.

2. System nach Anspruch 1, **dadurch gekennzeichnet, dass** es eine Pumpe (96') umfasst, die am Ausgang des Behälters (90) für flüssigen kryogenen Brennstoff und stromaufwärtig zur Nebenheizvorrichtung (92) und zur Anordnung (93) von Wärmetauschern angeordnet ist, und dadurch, dass diese Pumpe (96') das Zuführen des von dem Lagerbehälter (90) stammenden kryogenen Brennstoffs bei einem Druck ermöglicht, der höher als der kritische Druck dieses kryogenen Brennstoffs ist.

3. System nach Anspruch 2, **dadurch gekennzeichnet, dass** die Nebenheizvorrichtung (92'), der Wärmetauscher (94') für kryogenen Brennstoff/Öl und der Wärmetauscher (95') für kryogenen Brennstoff/Luft, die im Primärstrahl des Turbinenmotors umläuft, Wärmetauscher vom überkritischen Typ sind, die das Zuführen des kryogenen Brennstoffs bei einer Temperatur ermöglichen, die höher als seine kritische Temperatur ist.

4. System nach Anspruch 1, **dadurch gekennzeichnet, dass** es eine Pumpe (96) umfasst, die am Ausgang des Behälters (90) für flüssigen kryogenen Brennstoff und stromaufwärtig zu der Nebenheizvorrichtung (92) und zu der Wärmetauscheranordnung (93) angeordnet ist, wobei diese Pumpe (96) es ermöglicht, den kryogenen Brennstoff, der aus dem Behälter (90) austritt, mit Druck zu beaufschlagen, damit er vollständig flüssig ist.

5. System nach Anspruch 1 oder 4, **dadurch gekennzeichnet, dass** die Nebenheizvorrichtung (92), der Wärmetauscher (94) für kryogenen Brennstoff/Öl und der Wärmetauscher (95) für kryogenen Brennstoff/Luft, die im Primärstrahl des Turbinenmotors umläuft, Wärmetauscher vom zweiphasigen Typ sind, die das Erwärmen des kryogenen Brennstoffs im flüssigen Zustand ermöglichen, um ihn im gasförmigen Zustand zuzuführen.

6. System nach einem der vorhergehenden Ansprüche, **dadurch gekennzeichnet, dass** der Turbinenmotor (1) ein Zweiwellen-Turbinenmotor ist, der aufeinanderfolgend einen Niederdruckverdichter (3), einen Hochdruckverdichter (4), die Brennkammer (5), eine Hochdruckturbine (6) und eine Niederdruckturbine (7) umfasst, und dadurch, dass der Wärmetauscher für kryogenen Brennstoff/Luft, die im Primärstrahl des Turbinenmotors umläuft, ein Kühltauscher (95a, 95'a) zwischen Verdichtern ist, der zwischen dem Niederdruckverdichter (3) und dem Hochdruckverdichter (4) angeordnet ist und den Wärmetaustausch mit Luft ausführt, die in dem Primärstrahl stromabwärtig zu dem Niederdruckverdichter (3) des Turbinenmotors (1) entnommen wird.

7. System nach einem der Ansprüche 1 bis 5, **dadurch gekennzeichnet, dass** der Wärmetauscher für kryogenen Brennstoff/Luft, die in dem Primärstrahl des Turbinenmotors umläuft, eine Wärmerückgewinnungsanlage (95b, 95'b) ist, die den Wärmeaustausch mit Luft ausführt, die in dem Primärstrahl stromabwärtig zu der Turbine (6, 7) des Turbinenmotors (1) entnommen wird.

8. System nach einem der vorhergehenden Ansprüche, **dadurch gekennzeichnet, dass** die Nebenheizvorrichtung (92, 92') eine elektrische oder thermische Vorrichtung ist.

9. System nach Anspruch 6, **dadurch gekennzeichnet, dass** der Kühltauscher (95a, 95'a) zwischen Verdichtern in Reihe mit dem Wärmetauscher (94, 94') für kryogenen Brennstoff/Öl, vorzugsweise stromaufwärtig zum Wärmetauscher (94, 94') für kryogenen Brennstoff/Öl, montiert ist.

10. System nach Anspruch 6, **dadurch gekennzeichnet, dass** der Kühltauscher (95a, 95'a) zwischen Verdichtern parallel mit dem Wärmetauscher (94, 94') für kryogenen Brennstoff/Öl montiert ist.

11. System nach Anspruch 7, **dadurch gekennzeichnet, dass** die Wärmerückgewinnungsanlage (95b, 95'b) und der Wärmetauscher (94, 94') für kryogenen Brennstoff/Öl in Reihe montiert sind.

12. System nach Anspruch 11, **dadurch gekennzeichnet, dass** die Wärmerückgewinnungsanlage (95b, 95'b) stromaufwärtig zu dem Wärmetauscher (94, 94') für kryogenen Brennstoff/Öl montiert ist.

13. System nach Anspruch 11, **dadurch gekennzeichnet, dass** die Wärmerückgewinnungsanlage (95b, 95'b) stromabwärtig zum Wärmetauscher (94, 94') für kryogenen Brennstoff/Öl montiert ist.

14. System nach einem der vorhergehenden Ansprüche, **dadurch gekennzeichnet, dass** es einen Brennstoffverdichter (97) umfasst, der zwischen der Mischkammer (91) und der Brennkammer (5) angeordnet ist.

15. System nach einem der vorhergehenden Ansprüche, **dadurch gekennzeichnet, dass** der kryogene Brennstoff Flüssigerdgas oder flüssiger Wasserstoff ist.

16. Turbinenmotor (1) für ein Luftfahrzeug, der aufeinanderfolgend mindestens einen Luftverdichter (3, 4), eine Brennkammer (5), zu der kryogener Brennstoff zugeführt wird, und mindestens eine Turbine (6, 7) umfasst, **dadurch gekennzeichnet, dass** er ein System (9) zur Zufuhr von kryogenem Brennstoff zur Brennkammer nach einem der Ansprüche 1 bis 15 umfasst.

17. Verfahren zur Lenkung des Systems (9) zur Zufuhr von kryogenem Brennstoff zur Brennkammer nach einem der Ansprüche 1 bis 15, **dadurch gekennzeichnet, dass** es die Schritte umfasst, die bestehen aus:
- während der Abflugphase des Luftfahrzeugs, Öffnen der Strömungsverteilungsvorrichtung (98a), die stromaufwärtig zu der Nebenheizvorrichtung (92, 92') angeordnet ist, und der mindestens einen Strömungsverteilungsvorrichtung (98b, 98c, 98d, 98e), die stromaufwärtig zu der Anordnung (93, 93') von Wärmetauschern angeordnet ist, derart dass der zu erwärmende kryogene Brennstoff in der Nebenheizvorrichtung (92, 92') und in der Anordnung (93, 93') von Wärmetauschern in Umlauf gebracht wird,
- und, während der anderen Flugphasen des Luftfahrzeugs, Schließen der stromaufwärtig zu der Nebenheizvorrichtung (92, 92') angeordneten Strömungsverteilungsvorrichtung (98a) und Öffnen der mindestens einen Strömungsverteilungsvorrichtung (98b, 98c, 98d, 98e), die stromaufwärtig zu der Anordnung (93, 93`) von Wärmetauschern angeordnet ist, derart dass der zu erwärmende kryogene Brennstoff einzig in der Anordnung (93, 93`) von Wärmetauschern in Umlauf gebracht wird.

## Claims

1. A cryogenic fuel supply system (9) for the combustion chamber (5) of an aircraft turbine engine (1), this turbine engine (1) successively comprising at least one air compressor (3, 4), said combustion chamber (5) and at least one turbine (6, 7), this system comprising:
- a storage tank for this cryogenic fuel in the liquid state (90),
- a mixing chamber (91) receiving various flows of cryogenic fuel in the supercritical or gaseous state, this mixing chamber being connected to said combustion chamber (5) in order to supply it with cryogenic fuel in the supercritical or gaseous state,
this supply system (9) being **characterised in that** it comprises:
- an auxiliary heating device (92, 92') mounted in a line which connects said tank (90) to the mixing chamber (91), this auxiliary heating device (92, 92') enabling heating of the cryogenic fuel,
- a heat exchanger assembly (93, 93'), connected to said cryogenic fuel tank (90) and to said mixing chamber (91), and mounted in parallel with said auxiliary heating device (92, 92'), this heat exchanger assembly (93, 93') comprising a cryogenic fuel/oil heat exchanger (94, 94') and a heat exchanger (95, 95') between the cryogenic fuel and the air circulating in the primary duct of the turbine engine,
- a flow distribution device (98a) disposed upstream of the auxiliary heating device (92, 92'),
at least one flow distribution device (98b, 98c, 98d, 98e), such as a valve, disposed upstream of the heat exchanger assembly (93, 93'),
the opening and the closing of these various flow distribution devices (98a, 98b, 98c, 98d) being controlled by a central control unit (99).

2. The system according to claim 1, **characterised in that** it comprises a pump (96'), disposed at the outlet of the liquid cryogenic fuel tank (90) and upstream of said auxiliary heating device (92) and of said heat exchanger assembly (93), and **in that** this pump (96') can bring the cryogenic fuel originating from the storage tank (90) to a pressure greater than the critical pressure of this cryogenic fuel.

3. The system according to claim 2, **characterised in that** the auxiliary heating device (92'), the cryogenic fuel/oil heat exchanger (94') and the heat exchanger between the cryogenic fuel and the air circulating in the primary duct of the turbine engine (95') are supercritical exchangers that can bring the cryogenic fuel to a temperature greater than its critical temperature.

4. The system according to claim 1, **characterised in that** it comprises a pump (96), disposed at the outlet of the liquid cryogenic fuel tank (90) and upstream of the auxiliary heating device (92) and of the heat exchanger assembly (93), this pump (96) being able to pressurise the cryogenic fuel leaving the tank (90), in order that it is totally liquid.

5. The system according to claim 1 or 4, **characterised in that** the auxiliary heating device (92), the cryogenic fuel/oil heat exchanger (94) and the heat exchanger between the cryogenic fuel and the air circulating in the primary duct of the turbine engine (95) are two-phase exchangers which can heat the cryogenic fuel in the liquid state in order to bring it into the gaseous state.

6. The system according to any one of the preceding claims, **characterised in that** said turbine engine (1) is a twin-spool turbine engine successively comprising a low-pressure air compressor (3), a high-pressure air compressor (4), said combustion chamber (5), a high-pressure turbine (6) and a low-pressure turbine (7) and **in that** said heat exchanger between the cryogenic fuel and the air circulating in the primary duct of the turbine engine is an inter-compressor cooling exchanger (95a, 95'a) disposed between the low-pressure air compressor (3) and the high-pressure air compressor (4) and performing the heat exchange with the air taken in the primary duct, downstream of said low-pressure air compressor (3) of the turbine engine (1).

7. The system according to any one of claims 1 to 5, **characterised in that** said heat exchanger between the cryogenic fuel and the air circulating in the primary duct of the turbine engine is a heat recuperator (95b, 95'b) performing the heat exchange with the air taken in the primary duct, downstream of the turbine (6,7) of the turbine engine (1).

8. The system according to one of the preceding claims, **characterised in that** the auxiliary heating device (92, 92') is an electrical or thermal device.

9. The system according to claim 6, **characterised in that** said inter-compressor cooling exchanger (95a, 95'a) is mounted in series with the cryogenic fuel/oil heat exchanger (94, 94'), preferably upstream of the cryogenic fuel/oil heat exchanger (94, 94').

10. The system according to claim 6, **characterised in that** said inter-compressor cooling exchanger (95a, 95'a) is mounted in parallel with the cryogenic fuel/oil heat exchanger (94, 94').

11. The system according to claim 7, **characterised in that** the heat recuperator (95b, 95'b) and the cryogenic fuel/oil heat exchanger (94, 94') are mounted in series.

12. The system according to claim 11, **characterised in that** the heat recuperator (95b, 95'b) is mounted upstream of the cryogenic fuel/oil heat exchanger (94, 94').

13. The system according to claim 11, **characterised in that** the heat recuperator (95b, 95'b) is mounted downstream of the cryogenic fuel/oil heat exchanger (94, 94').

14. The system according to any one of the preceding claims, **characterised in that** it comprises a fuel compressor (97), disposed between the mixing chamber (91) and the combustion chamber (5).

15. The system according to one of the preceding claims, **characterised in that** the cryogenic fuel is liquefied natural gas or liquid hydrogen.

16. A turbine engine (1) of an aircraft successively comprising at least one air compressor (3, 4), a combustion chamber (5) supplied with cryogenic fuel and at least one turbine (6, 7), **characterised in that** it comprises a cryogenic fuel supply system (9) for said combustion chamber, in accordance with any one of claims 1 to 15.

17. A method for controlling the cryogenic fuel supply system (9) for said combustion chamber in accordance with any one of claims 1 to 15, **characterised in that** it comprises the steps consisting of:
- during the take-off phase of the aircraft, opening said flow distribution device (98a) disposed upstream of the auxiliary heating device (92, 92') and said at least one flow distribution device (98b, 98c, 98d, 98e) disposed upstream of the heat exchanger assembly (93, 93'), so as to cause the cryogenic fuel that is to be heated, to circulate in said auxiliary heating device (92, 92') and in said heat exchanger assembly (93, 93'),
- and during the other flight phases of the aircraft, closing said flow distribution device (98a) disposed upstream of the auxiliary heating device (92, 92') and opening said at least one flow distribution device (98b, 98c, 98d, 98e) disposed upstream of the heat exchanger assembly (93, 93'), so as to cause the cryogenic fuel that is to be heated, to circulate only in said heat exchanger assembly (93, 93').
